(19) Europäisches Patentamt
European Patent Office
Office européen des brevets

(11)  EP 3 301 640 B1

(12)  **EUROPÄISCHE PATENTSCHRIFT**

(45) Veröffentlichungstag und Bekanntmachung des Hinweises auf die Patenterteilung:
**28.11.2018  Patentblatt 2018/48**

(51) Int Cl.:
*G06T 5/20* *(2006.01)*

(21) Anmeldenummer: **17193958.0**

(22) Anmeldetag: **29.09.2017**

(54) **VERFAHREN UND WÄRMEBILDKAMERA ZUR BERÜHRUNGSLOSEN TEMPERATURMESSUNG ODER ZUR BEOBACHTUNG VON SCHNELL BEWEGTEN IR-SZENEN MIT EINEM THERMISCHEN IR-BILDSENSOR**

METHOD AND THERMAL CAMERA FOR THE CONTACTLESS MEASUREMENT OF A TEMPERATURE OR FOR OBSERVING QUICKLY MOVING IR SCENES WITH A THERMAL IR IMAGER

PROCÉDÉ ET CAMÉRA THERMIQUE DE MESURE DE TEMPÉRATURE SANS CONTACT OU DE SURVEILLANCE DE MOUVEMENTS INFRAROUGE RAPIDE AU MOYEN D'UN CAPTEUR D'IMAGE INFRAROUGE THERMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.09.2016  DE 102016118638**

(43) Veröffentlichungstag der Anmeldung:
**04.04.2018  Patentblatt 2018/14**

(73) Patentinhaber: **JENOPTIK Advanced Systems GmbH**
**22880 Wedel (DE)**

(72) Erfinder:
• **RAABE, Christian**
 **07743 Jena (DE)**
• **WEISBACH, Frank**
 **07747 Jena (DE)**

(74) Vertreter: **Freitag, Joachim et al**
**Patentanwälte**
**Oehmke & Kollegen**
**Neugasse 13**
**07743 Jena (DE)**

(56) Entgegenhaltungen:
**DE-A1- 10 110 294    US-A1- 2015 312 489**

• **MEIER W ET AL: "INFRARED IMAGE ENHANCEMENT WITH NONLINEAR SPATIO-TEMPORAL FILTERING", SIGNAL PROCESSING THEORIES AND APPLICATIONS. BRUSSELS, AUG. 24 - 27, 1992; [PROCEEDINGS OF THE EUROPEAN SIGNAL PROCESSING CONFERENCE (EUSIPCO)], AMSTERDAM, ELSEVIER, NL, Bd. 3, 24. August 1992 (1992-08-24), Seiten 1397-1400, XP000356503,**

**Beschreibung**

Die Erfindung betrifft ein Verfahren sowie eine Wärmebildkamera zur berührungslosen Temperaturmessung oder zur Beobachtung von schnell bewegten IR-Szenen mit einem thermischen IR-Bildsensor, insbesondere für ungekühlte thermische IR-Kameras.

In vielen messenden Wärmebildkameras und IR-Beobachtungsgeräten werden heute häufig kostengünstige ungekühlte Mikrobolometerarrays eingesetzt. Mikrobolometer sind thermische IR-Bildsensoren und haben auf Grund ihres Wirkprinzips relativ lange Ansprechzeiten. Sie eignen sich daher kaum für Anwendungen mit höheren dynamischen Anforderungen. Schnelle radiometrische Temperaturmessungen sind nicht möglich oder stark fehlerbehaftet. Die Trägheit der Mikrobolometer äußert sich auch in Bewegungsunschärfe bei Kameraschwenks oder bei Objekten, die schnell durch das Bildfeld wandern.

Das dynamische Verhalten von Mikrobolometerarrays ist in zahlreichen Publikationen thematisiert. Generell wird die thermische Zeitkonstante der Pixel $\tau_{th}$ - neben der Bildrate des Sensors - als eine wichtige Kenngröße und als ein wesentlicher limitierender Faktor für die "Schnelligkeit" einer IR-Kamera angesehen. Es finden sich in der Literatur jedoch keine Lösungsansätze zur dynamischen Kompensation. Die thermische Trägheit von Mikrobolometern wird lediglich als Fakt genannt. Lediglich für thermische Einzelsensoren, beispielsweise in Thermometern, ist eine Frequenzgangkorrektur bekannt.

Derzeit setzt man ausschließlich auf den Einsatz neuer, schnellerer Sensoren. Die technischen Möglichkeiten sind jedoch begrenzt (z. B. Reduzierung der "thermischen Masse") und von den Anwendern meist nicht beeinflussbar. Oftmals bleibt als Ausweg zur Vermeidung der thermischen Trägheit der Wärmebildaufnahmen nur der Umstieg auf gekühlte photonische Sensoren.

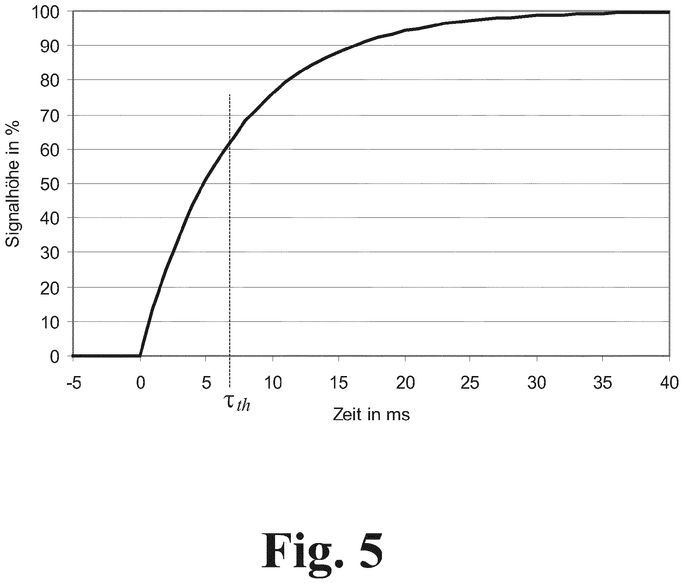

Allgemein gelten zeitkritische Messaufgaben nicht als Domäne der thermischen Sensoren, da der dynamische Messfehler nach der Zeitdauer $\tau_{th}$ noch etwa 37 % beträgt (wie es in Fig. 5 für ein a-Si-Mikrobolometer gezeigt ist). Präzise Messungen sind erst nach einer Zeitspanne von mehreren $\tau_{th}$ möglich. Ähnliches gilt auch für andere Typen thermischer IR-Bildsensoren, u.a. für thermoelektrische Sensoren ("Thermopiles"), pyroelektrische/ferroelektrische Sensoren sowie für Sensoren auf Basis bimorpher Microcantilever-Arrays.

Der Erfindung liegt die Aufgabe zugrunde, eine neue Möglichkeit zur Korrektur der dynamischen Trägheit von thermischen IR-Sensorarrays zu finden, mittels der dynamische Messfehler einer radiometrischen bzw. thermischen Wärmebildkamera deutlich reduziert werden können. In einer erweiterten Aufgabenstellung soll auch eine Verringerung der Bewegungsunschärfe erreicht werden.

Erfindungsgemäß wird die Aufgabe bei einem Verfahren zur berührungslosen Temperaturmessung oder zur Beobachtung von schnell bewegten IR-Szenen mit einem thermischen IR-Bildsensor durch die folgenden Schritte gelöst:

- Aufnehmen einer IR-Szene mittels des thermischen IR-Bildsensors,

- Auslesen eines Sensorarrays des IR-Bildsensors mit einer Bildrate, die höher ist als eine der thermischen Zeitkonstante $\tau_{th}$ des IR-Bildsensors zugeordnete charakteristische Frequenz und Bereitstellen von Sensorsignalen in Form von vorverarbeiteten Filtereingangsdaten,

- Anwenden eines räumlich-temporalen Bildfilters, bei dem eine matrixwertige Übertragungsfunktion einstellbare Parameter enthält und in Form von Matrixelementen das Responseverhalten jedes einzelnen korrigierten Ergebnispixelwertes von ausgegebenen Ergebnisbilddaten auf einen gesamten Satz zeitlich vorangegangener Pixelwerte der Filtereingangsdaten charakterisiert, wobei eine Einstellung einer gewünschten Filtercharakteristik durch Anpassen von Parametern des Bildfilters zur Beeinflussung der Lage von Eigenwerten wenigstens einer Faltungsmatrix erfolgt, um mindestens Nullstellen oder Polstellen in der Übertragungsfunktion der Konfiguration des Bildfilters an eine konkrete Messaufgabe oder Beobachtungsaufgabe anzupassen, indem ein lineares Gleichungssystem zur Beeinflussung der Eigenwerte der wenigstens einen Faltungsmatrix mittels numerischer Verfahren mindestens näherungsweise gelöst wird.

Vorteilhaft geschieht das Auslesen des Sensorarrays des IR-Bildsensors mit einer Bildrate, die mindestens das Doppelte der charakteristischen Frequenz, die der thermischen Zeitkonstanten $\tau_{th}$ der Sensorelemente des Sensorarrays des IR-Bildsensors zugeordnet ist, beträgt. Dabei erfolgt das Auslesen des Sensorarrays bevorzugt mit einer Bildrate, die mindestens das Dreifache der charakteristischen Frequenz beträgt.

Das Anpassen der Parameter des Bildfilters zur Beeinflussung der Eigenwerte der mindestens einen Faltungsmatrix erfolgt zweckmäßig durch numerisches Lösen des linearen Gleichungssystems mittels Näherungslösungen, bevorzugt auf Basis der kleinsten Fehlerquadrate.

Zusätzlich zu den Polstellen und Nullstellen können für die Konfiguration des Bildfilters auch Amplituden-Eigenwerte durch Erweiterung des linearen Gleichungssystems mit weiteren linearen Gleichungen angepasst werden.

Bei der numerischen Lösung des linearen Gleichungssystems erweist es sich als vorteilhaft, zusätzlich eine Gewichtung von bestimmten Ortsfrequenzen vorzunehmen.

Des Weiteren wird die Aufgabe der Erfindung bei einer Wärmebildkamera zur berührungslosen Temperaturmessung oder zur Beobachtung von schnell bewegten IR-Szenen mit einem thermischen IR-Bildsensor, dadurch gelöst, dass mindestens ein räumlich-temporales Bildfilter dem Ausgang des IR-Bildsensors nachgeordnet ist, dass das Bildfilter als mindestens eine Bildverarbeitungseinheit zur Realisierung einer matrixwertigen Übertragungsfunktion ausgebildet ist, wobei in Berechnungen jedes Ergebnispixelwertes $v_{xy}(t)$ ein jeweils aktueller Sensorpixelwert $u_{xy}(t)$ eingesetzt ist sowie eine Anzahl zeitlich zurückliegender Sensorpixelwerte $u_{xy}(t-k\cdot\Delta t)$, eine Anzahl benachbarter Sensorpixelwerte $u_{(x\pm m\cdot\Delta x)(y\pm n\cdot\Delta y)}(t)$ und eine Anzahl zeitlich zurückliegender benachbarter Sensorpixelwerte $u_{(x\pm m\cdot\Delta x)(y\pm n\cdot\Delta y)}(t-k\cdot\Delta t)$ berücksichtigt sind.

Vorteilhaft ist das Bildfilter durch wenigstens eine Parameterberechnungseinheit (5) mindestens temporär mit Mitteln zur Einstellung von Parametern des Bildfilters durch Beeinflussung der Lage von Eigenwerten wenigstens einer Faltungsmatrix verknüpft, um mindestens Nullstellen oder Polstellen der Übertragungsfunktion an eine konkrete Messaufgabe oder Beobachtungsaufgabe anzupassen, wobei die Mittel zur Einstellung der Parameter eine Rechnereinheit zur Lösung eines linearen Gleichungssystems für die Beeinflussung der Eigenwerte der wenigstens einen Faltungsmatrix mittels numerischer Näherungsverfahren beinhalten.

Vorzugsweise hat die Übertragungsfunktion des räumlich-temporalen Bildfilters in einer komplexen s-Ebene im Bildbereich einer Laplace-Transformation eine oder mehrere Nullstellen zur Kompensation der Polstellen der Übertragungsfunktion des IR-Bildsensors oder weist zweckmäßig eine oder mehrere Polstellen zur Begrenzung der Rauschbandbreite auf.

In einer ersten bevorzugten Variante sind ein oder mehrere Filterkoeffizienten entweder matrixwertig und als Faltungsmatrix im Ortsraum ausgebildet oder skalarwertig und so bemessen, dass mittels der Übertragungsfunktion des Bildfilters die Auswirkungen der thermische Trägheit der Sensorpixel in den zugehörigen Ergebnispixelwerten der ausgegebenen Ergebnisbilddaten reduziert werden.

In einer zweiten vorteilhaften Variante sind ein oder mehrere Filterkoeffizienten matrixwertig und als Faltungsmatrix im Ortsraum ausgebildet so bemessen, dass mittels der Übertragungsfunktion des Bildfilters die Auswirkungen des Übersprechens der Sensorpixel in den zugehörigen Ergebnispixelwerten der ausgegebenen Ergebnisbilddaten reduziert werden.

Bei einer zweckmäßigen dritten Variante sind ein oder mehrere Filterkoeffizienten matrixwertig und als Faltungsmatrix im Ortsraum ausgebildet so bemessen, dass mittels der Übertragungsfunktion des Bildfilters die ausgegebenen Ergebnisbilddaten von Ergebnispixelwerten eine räumliche Bildglättung oder Bildschärfung aufweisen.

In einer vierten zweckmäßige Variante sind ein oder mehrere Filterkoeffizienten skalarwertig und so bemessen, dass mittels der Übertragungsfunktion des Bildfilters die Rauschbandbreite der Sensorpixel in den zugehörigen Ergebnispixelwerten der ausgegebenen Ergebnisbilddaten reduziert ist.

In einer weiteren bevorzugten Variante sind ein oder mehrere Filterkoeffizienten des Bildfilters in Abhängigkeit vom Bildinhalt fortlaufend variabel anpassbar, sodass mittels der Übertragungsfunktion des Bildfilters stets eine optimierte Filterwirkung bei minimalen Artefakten in den ausgegebenen Ergebnisbilddaten eingestellt werden kann. Eine gewünschte Übertragungsfunktion des Bildfilters wird besonders vorteilhaft durch ein IIR-System approximativ realisiert.

Die Erfindung basiert auf der Grundüberlegung, dass die Messeffizienz einer Wärmebildkamera auf Basis eines Mikrobolometerarrays bei schnellen Änderungen der Szene an der thermischen Trägheit seiner einzelnen Sensorelemente, die als thermische Widerstandsbrücken arbeiten, leidet. Daran lässt sich auch durch Änderung thermischer Eigenschaften des Sensorarrays (z. B. durch Verringerung der thermischen Masse jedes Einzelelements) nur geringfügig etwas verbessern. Grund dafür ist die thermische Trägheit der Bolometerelemente, die durch eine thermische Zeitkonstante $\tau_{th}$ als charakteristische Größe des Wärmeübergangsverhaltens beschrieben werden kann. Im Rahmen dieses Modells entspricht das Übergangsverhalten, wie es in Fig. 5 für ein a-Si-Mikrobolometer gezeigt ist, der Sprungantwort eines Verzögerungsgliedes erster Ordnung, zeigt also ein exponentielles Anschmiegen an den sich nach hinreichend langer Zeit einstellenden Wert. Die thermische Zeitkonstante $\tau_{th}$ entspricht dabei der Zeitdauer, nach der das [1 - exp(-1)]-fache (d.h. etwa 63 %) der Sprunghöhe erreicht ist. Der thermischen Zeitkonstanten $\tau_{th}$ kann eine charakteristische Frequenz $f_{th} = 1/(2\pi\,\tau_{th})$ zugeordnet werden.

Die thermische Zeitkonstante $\tau_{th}$ (die bei den namhaften Herstellern von Bolometerarrays typischerweise im Bereich zwischen 7 und 15 ms liegt) ist aufgrund der Sensorkonstruktion durch Hardware-Optimierungen kaum noch signifikant zu verringern. Die Erfindung löst dieses Problem durch digitale Bildverarbeitung auf Basis einer räumlich-temporalen Filterung von ausgelesenen Sensordaten. Dabei fließen in die Berechnung jedes erzeugten Ergebnispixelwertes jeweils Messwerte eines betrachteten Sensorpixels sowie eine Anzahl zeitlich vorausgegangener Werte des betrachteten Sensorpixels, eine Anzahl räumlich benachbarter Pixelwerte und eine Anzahl zeitlich vorausgegangener Werte der räumlich benachbarten Pixel ein.

Dies wird dadurch erreicht, dass das räumlich-temporale Bildfilter eine Übertragungsfunktion aufweist, bei der in einer komplexen s-Ebene als Bildbereich einer Laplace-Transformation mindestens eine Nullstelle zur Kompensation von Polstellen der Signalübertragungsfunktion des Sensors und mindestens eine Polstelle zur Begrenzung einer Rauschbandbreite aufzufinden sind.

Die Übertragungsfunktion des räumlich-temporalen Bildfilters lässt sich mathematisch als rationale Funktion darstellen. Sie ist matrixwertig, wenn ein oder mehrere Filterkoeffizienten matrixwertig sind. Die matrixwertigen Filterkoeffizienten können im Ortsraum als Faltungsmatrix wirken und so bemessen sein, dass die Übertragungsfunktion die thermische Trägheit und das Übersprechen der Sensorpixel kompensiert.

In einer anderen Adaption sind ein oder mehrere Filterkoeffizienten matrixwertig, wirken als Faltungsmatrix im Ortsraum und sind so bemessen, dass die Übertragungsfunktion des Bildfilters zu einer räumlichen Bildglättung oder Bildschärfung führt. Eine weitere Ausführung sieht vor, dass ein oder mehrere Filterkoeffizienten skalarwertig und so bemessen sind, dass mittels der Übertragungsfunktion des Filters die thermische Trägheit der Sensorpixel kompensiert und/oder die Rauschbandbreite reduziert wird. In allen Fällen lassen sich ein oder mehrere Filterkoeffizienten variabel in Abhängigkeit vom Bildinhalt fortlaufend anpassen, um eine optimale Filterwirkung mit minimalen Artefakten zu erreichen.

Zur Realisierung der Filterfunktion werden numerische Approximationen mittels rekursiver Systeme angewendet, wobei insbesondere Filter mit unendlicher Impulsantwort, sog. IIR-Filter (Infinite Impulse Response Filter) verwendet werden.

Mit der Erfindung ist es somit möglich,

- den dynamischen Messfehler einer radiometrischen Wärmebildkamera mit Mitteln der digitalen Bildverarbeitung zu reduzieren, indem die thermische Zeitkonstante $\tau_{th}$ der Sensorelemente und das Übersprechen der Pixel mit numerischen Mitteln kompensiert bzw. in ihrer Auswirkung reduziert werden,
- durch Anwenden der gleichen Methode die Bewegungsunschärfe zu verringern,
- ein räumlich-temporales Bildfilter zur digitalen Signalverarbeitung in einer Wärmebildkamera zu beschreiben, das bei festem Systemdesign allein durch Wahl der Koeffizienten unterschiedliche Funktionen, wie Frequenzgangkorrektur (temporal differenzierend), Reduzierung der Rauschbandbreite (temporal integrierend) und Bildglättung (räumlich integrierend), realisiert.

Die Erfindung soll nachfolgend anhand von Ausführungsbeispielen und Abbildungen näher erläutert werden. Dabei zeigen:

Fig. 1: eine schematische Darstellung des erfindungsgemäßen Verfahrens mit der Struktur eines räumlich-temporalen Bildfilters;

Fig. 2: eine schematische Darstellung der Signalverarbeitung des Bilddatenstroms einer erfindungsgemäßen Wärmebildkamera mit einem räumlich-temporalen Bildfilter;

Fig. 3: eine erste Ausführung der Erfindung in Form eines IIR-Systems als rekursive Umsetzung des räumlich-temporalen Bildfilters;

Fig. 4: eine bevorzugte Ausführung der Erfindung für eine Wärmebildkamera mit räumlich-temporalem Bildfilter als rekursives IIR-System;

Fig. 5: eine Darstellung des Übergangsverhaltens eines a-Si-Mikrobolometers mit Kennzeichnung der thermischen Zeitkonstante $\tau_{th}$.

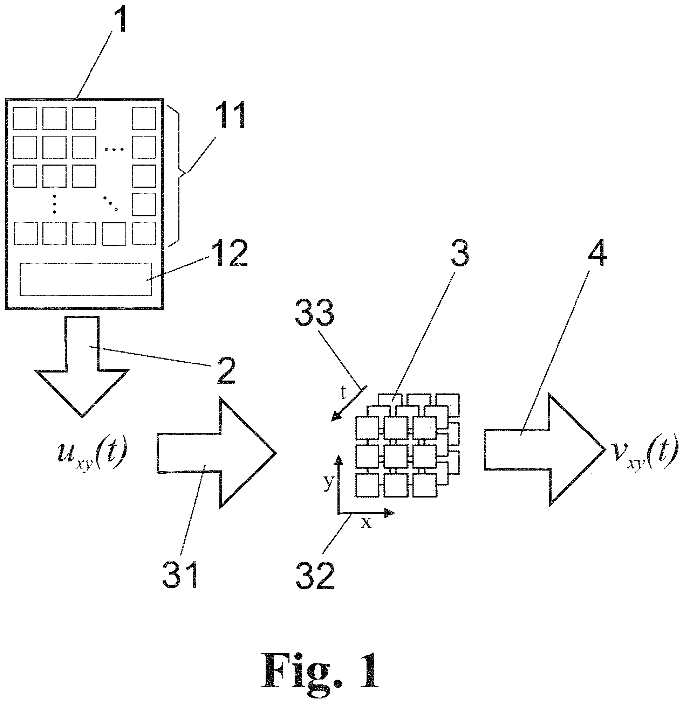

Das erfindungsgemäße Verfahren ist in Fig. 1 für eine Wärmebildkamera schematisch dargestellt. Diese umfasst einen thermischen IR-Bildsensor 1, der ein IR-Sensorarray 11, vorzugsweise in Form eines Mikrobolometerarrays, und eine Ausleseschaltung 12, üblicherweise bereits mit einer Signalvorverarbeitung ausgestattet, enthält, sowie ein räumlich-temporales Bildfilter 3.

Die vom Sensorarray 11 als Sensorbilder gelieferten Rohsignalwerte müssen in der Regel aufbereitet werden, um eine für eine erfolgreiche Filteranwendung ausreichende Signalqualität zu erreichen. Eine solche Aufbereitung wird als Vorverarbeitungsschritte wenigstens eine Ungleichmäßigkeitskorrektur (NUC, non-uniformity correction) beinhalten. Diese kann zum Beispiel als Einpunktkorrektur ausgeführt sein, wobei in Abhängigkeit von Temperatureinflüssen driftende Rohsignalwerte mit Hilfe eines Referenzbildes abgeglichen werden (Offset-Korrektur). Gängiger ist es jedoch, eine Zweipunktkorrektur auszuführen, wobei zusätzlich zur Offset-Korrektur mit einem Verstärkungsfaktorfeld (engl. gain field) eventuelle Unterschiede der Empfindlichkeiten der Sensorelemente und zugleich auch der natürliche Randlichtabfall und Transmissionsinhomogenitäten einer dem IR-Bildsensor 1 vorgelagerten Optik (hier nicht gezeichnet) ausgeglichen werden können. Solche Verstärkungsfaktorfelder können werksseitig einkalibriert sein. Die für die Offset-Korrektur benötigten Referenzbilder werden im Live-Betrieb üblicherweise in gewissen Abständen mittels eines Shutters ermittelt bzw. aktualisiert oder sie können von shutterlosen Verfahren geliefert werden.

Zusätzlich zur Ungleichmäßigkeitskorrektur können die Vorverarbeitungsschritte beispielsweise auch noch ein Defektpixelersetzungsschema beinhalten.

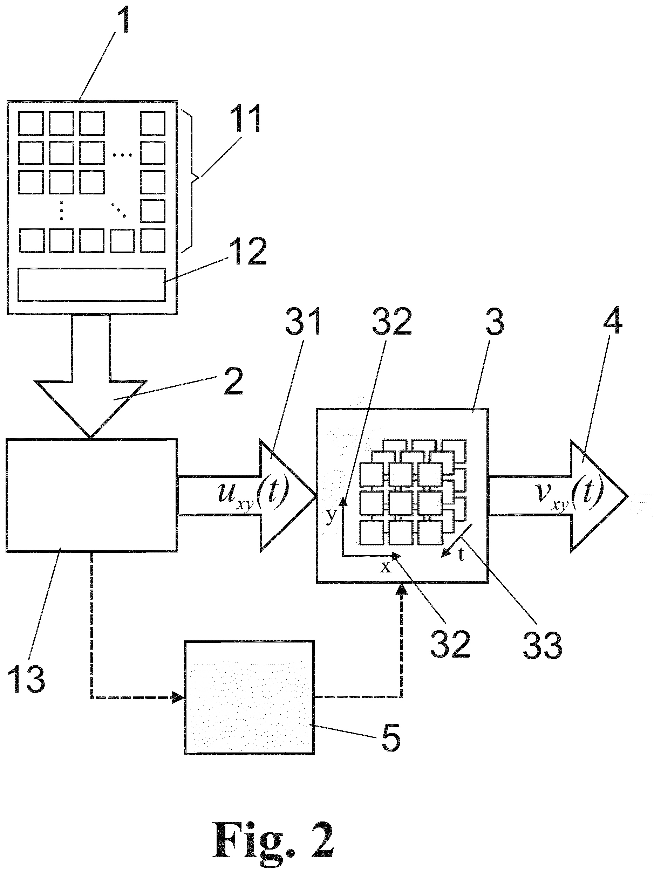

Die vorgenannten Korrekturen einer Signalvorverarbeitung können bereits in einer chipinternen Schaltung des IR-Bildsensors 1 enthalten sein oder auch in einer nachgeordneten separaten Bildvorverarbeitungseinheit 13 (nur in Fig. 2 gezeichnet) realisiert werden. In modernen IR-Bildsensoren 1, wie in Fig. 1 angenommen, sind diese Korrekturen zumindest überwiegend bereits in der Ausleseschaltung 12 implementiert, die dann häufig eine Bias-Steuerung zur Kompensation der ungleichmäßigen Offsets und/oder Empfindlichkeiten der einzelnen Sensorelemente des IR-Sensorarrays 11 enthält.

Das Ergebnis der Signalvorverarbeitung der Ausleseschaltung 12 ist ein Bilddatenstrom 2 von aufbereiteten Sensorbildern, der als Filtereingangsdaten 31 in der Form $u_{xy}(t)$ bereitgestellt wird. Das räumlich-temporale Bildfilter 3 gibt dann korrigierte Ergebnisbilddaten 4 in der Form $v_{xy}(t)$ aus. Für die Funktion des Bildfilters 3 ist es dabei grundsätzlich unerheblich, ob der ausgelesene Bilddatenstrom 2 von Sensor-Rohbildern direkt in einem Online-Vorgang durch die oben beschriebenen Vorverarbeitungsschritte in den Datenstrom der aufbereiteten Sensorbilder überführt oder unmittelbar als Filtereingangsdaten 31 verwendet wird. Stattdessen können die Filtereingangsdaten 31 beispielsweise auch so bereitgestellt werden, dass durch Vorverarbeitungsschritte aufbereitete Sensorbilder in einem Pufferspeicher zwischengespeichert (hier nicht gezeichnet) und zur Bereitstellung von Filtereingangsdaten 31 dann sukzessive wieder gelesen werden. Natürlich ist es auch möglich, den in Fig. 1 angenommenen Bilddatenstrom 2 aufbereiteter Sensorbilder als geordnete Sequenz von Bilddateien dauerhaft auf einem Massenspeicher (nicht gezeichnet) abzulegen. Das Bildfilter 3 kann dann komplett abgetrennt in einem Offline-Betrieb arbeiten, das Bereitstellen der Filtereingangsdaten 31 besteht dann lediglich in dem geordneten Einlesen der abgelegten Bilddateien.

Das räumlich-temporale Bildfilter 3 stellt ein dreidimensionales Filter dar, bei dem aus dem zweidimensional ausgelesenen Bilddatenstrom 2 aus dem IR-Sensorarray 11 auf die zwei räumlichen Dimensionen 32 der Filtereingangsdaten 31 zugegriffen und als dritte Dimension 33 der zeitliche Verlauf der aus dem Bilddatenstrom 2 resultierenden Filtereingangsdaten 31 betrachtet wird. Das Bildfilter 3 bewirkt somit eine Verknüpfung räumlicher und zeitlicher Komponenten des Bilddatenstroms 2, wie nachfolgend noch detailliert erläutert wird.

Fig. 2 zeigt ein Schema der Wärmebildkamera, in der das Verfahren gemäß Fig. 1 modifiziert ist, wobei die Signalvorverarbeitung (mindestens überwiegend) in einer separaten dem IR-Bildsensor 1 nachgeschalteten Bildvorverarbeitungseinheit 13 abläuft. Die Filtereingangsdaten 31 weisen somit mindestens eine Ungleichmäßigkeitskorrektur (NUC), eine Offset-Korrektur durch Referenzbildvergleich im Live-Betrieb und eine vollständige Ungleichmäßigkeitskorrektur mit Defektpixelersetzungsschema auf.

Die so vorverarbeiteten Filtereingangsdaten 31 weisen so eine deutlich geringere Stör- und Rauschsignalquote auf als die Rohdaten aus dem Bilddatenstrom 2, wodurch sich das Bildfilter 3 auf die reine Kompensation von Auswirkungen der dynamischen Messfehler durch schnelle Änderungen in der beobachteten IR-Szene ausrichten kann. Die Verknüpfung der einlaufenden Bildsignale als Filtereingangsdaten 31 erfolgt dabei, wie oben schon zu Fig. 1 beschrieben, unter Verwendung von zwei räumlichen Dimensionen 32 (x- und y-Koordinaten) sowie der zeitlichen Dimension (Bilddatensätze im zeitlichen Verlauf der vom IR-Sensorarray 11 aufgenommenen Bilder).

Für die nachfolgend noch näher erläuterte Bildfilterung mittels im Bildfilter 3 enthaltener Koeffizientenmatizen ist in der Ausführung von Fig. 2 eine Parameterberechnungseinheit 5 vorhanden, die wenigstens einmalig zur Konfiguration des Bildfilters 3 vor Beginn einer definierten Beobachtungsaufgabe zum Einsatz kommt, indem durch Beeinflussung der Lage von Eigenwerten einer oder mehrerer Faltungsmatrizen Nullstellen oder Polstellen der Übertragungsfunktion an eine konkrete Messaufgabe angepasst werden, oder aber auch im laufenden Betrieb der Wärmebildkamera (in Fig. 2 mit thermischem IR-Bildsensor 1 stilisiert dargestellt) im Einsatz ist. Im letzteren Fall werden ein oder mehrere Filterkoeffizienten als Faltungsmatrizen des Bildfilters 3 in Abhängigkeit vom Bildinhalt fortlaufend so variabel angepasst, dass mittels der Übertragungsfunktion des Bildfilters 3 stets eine optimierte Filterwirkung bei minimalen Artefakten in den ausgegebenen Ergebnisbilddaten 4 eingestellt ist.

Das räumlich-temporale Bildfilter 3 wird erfindungsgemäß möglichst vorteilhaft als temporales Bildfilter 3 parametrisiert, so dass je nach Konfiguration eine glättende (integrierende) oder schärfende (differenzierende) Charakteristik entsteht. Um einfach räumlich-temporale Verallgemeinerungen gleich mit abzudecken, wählt man zweckmäßig von vornherein eine Vektor- und Matrixschreibweise.

Begonnen wird mit der Beschreibung in stetiger Zeit und mit Betrachtung eines einfachen linearen Systems der Art:

$$\left(1 \cdot \frac{d}{dt} + \Gamma_1\right) \cdot u(t) = f(t)$$

$$(1)$$

[1, Einheitsmatrix] sowie noch eines weiteren, ähnlich gebauten linearen Systems

$$\left(T_2 \frac{d}{dt} + 1\right) \cdot A \cdot v(t) = f(t),$$

$$(2)$$

wobei $\Gamma_1$ und $T_2$ vorerst beliebige zeitunabhängige Matrizen sein können. Die Amplitudenverkopplungsmatrix A in Gl. (2) könnte auch aus der Beschreibung entfernt werden, indem $A\,v$ statt $v$ betrachtet wird, was an dieser Stelle aber nicht getan werden soll. Im Allgemeinen müssen die genannten Matrizen nicht invertierbar oder diagonalisierbar sein. Sie brauchen auch nicht als reell vorausgesetzt zu werden, obwohl dies in der Anwendung meist der Fall sein wird. Realteile von Eigenwerten von $T_2$ und von reziproken Eigenwerten von $\Gamma_1$ haben die Bedeutung von Zeitkonstanten. Das durch Gl. (1) beschriebene (Teil-)System soll so aufgefasst werden, dass $u$ auf den Eingangsvektor $f$ reagiert. Von Gl. (1) wird also die Lösung benötigt. In dem zweiten Teilsystem dagegen soll $f$ selbst gemäß Gl. (2) auf $v$ reagieren. In diesem Sinne ist Gl. (2) also bereits richtigherum aufgeschrieben. Die Kaskadierung beider Systeme ergibt ein relativ allgemeines Bildfilter 3, dessen Übertragungsverhalten jetzt untersucht werden soll.

Die allgemeine Lösung des Anfangswertproblems für Gl. (1) kann mit Hilfe des Propagators $V_1(\tau) = \exp(-\tau\Gamma_1)$ als

$$u(t) = V_1(t - t_0) \cdot u_0 + \int_{t_0}^{t} dt' V_1(t - t') \cdot f(t')$$

$$(3)$$

aufgeschrieben werden. Wenn dieses (Teil-)System so beschaffen ist, dass die Lösungen der homogenen Version von Gl. (1), d. h. die freien Bewegungen des Systems, zeitlich abklingen, dann gilt $V_1(\tau \to \infty) = 0$.

Dazu müssen die Eigenwerte von $\Gamma_1$ alle einen positiven Realteil haben. Eigenwerte mit verschwindendem Realteil können im Sinne eines nachträglichen Grenzübergangs mit erlaubt werden. Man sollte beachten, dass zu Eigenwerten mit positivem Realteil gehörige Lösungen der homogenen Gleichung zeitlich zunächst auch (im Prinzip beliebig weit) anwachsen können, bevor sie nach (im Prinzip beliebig langer Zeit) letztlich doch asymptotisch abklingen müssen. Dieses Phänomen kann nur bei nichtdiagonalisierbaren Matrizen auftreten, d. h. bei Matrizen, deren Eigenvektoren nicht vollständig sind.

Der beliebige Anfangszeitpunkt $t_0$ in Gl. (3) darf unter diesen Umständen in die ferne Vergangenheit ($t_0 \to -\infty$) zurückverlegt werden. Das System "vergisst" dann seine Anfangsbedingung $u_0$ nach hinreichend langer Zeit und es verbleibt nur der "getriebene" Anteil der Lösung,

$$u(t) = \int_{-\infty}^{t} dt' V_1(t - t') \cdot f(t').$$

$$(4)$$

Diese (retardierte) Form der Lösung wird meist als Ausdruck des Kausalitätsprinzips angesehen. Wie man sieht, ist es in diesem Fall keine unabhängige Forderung; unter den genannten Bedingungen verhält sich das (Teil-)System von selbst "kausal". Die Responsefunktion (retardierte Greensche Funktion; Impulsantwort; Suszeptibilitätskern im Zeitbereich) des (Teil-)Systems ist durch $\chi_1(\tau) = \theta(\tau)V_1(\tau)$ gegeben [$\theta(\tau)$, Heaviside-Sprungfunktion bzw. Einheitssprung], und ihre Fouriertransformierte liefert die Übertragungsfunktion (Transferfunktion; Systemfunktion; verallgemeinerte Suszeptibilität) in der komplexen Frequenzebene,

$$\underline{\chi}_1(\omega) = \int_{-\infty}^{\infty} d\tau e^{i\omega\tau} \chi_1(\tau) = \int_{0}^{\infty} d\tau e^{i\omega\tau} V_1(\tau).$$

$$(5)$$

Es kann auch die Laplace-Variable $s$ benutzt werden, $\omega = is$. Mit der genannten Annahme über $\Gamma_1$ ist dieses Integral zumindest für Re $s > 0$ konvergent und liefert

$$\underline{\chi}_1(is) = (s1 + \Gamma_1)^{-1}.$$

$$(6)$$

In der linken komplexen $s$-Halbebene gilt dieser Ausdruck weiter. Auf der rechten Seite von Gl. (6) erscheint die Resolvente von $-\Gamma_1$. Sie hat Polstellen genau bei den Eigenwerten von $-\Gamma_1$. Ihre explizite analytische Bestimmung erfordert in der Regel die analytische Lösung des Eigenwertproblems für $\Gamma_1$.

Für das Teilsystem Gl. (2) lässt sich die Responsefunktion aus der Gleichung selbst unmittelbar ablesen, $\chi_2(\tau) = [\delta'(\tau)T_2 + \delta(\tau)1] \cdot A$. Sie ist nicht retardiert, sondern instantan, jedoch ebenfalls kausal, $\chi_2(\tau < 0) = 0$. Die zugehörige

Übertragungsfunktion lautet

$$\underline{\chi}_2(is) = (sT_2 + 1) \cdot A .$$ (7)

Das kaskadierte Gesamtsystem, d. h. die lineare Response von *u* auf *v*, wird somit durch die Übertragungsfunktion $\underline{\chi}(\omega)=\underline{\chi}_1(\omega)\cdot\underline{\chi}_2(\omega)$, d. h.

$$\underline{\chi}(is) = (s1 + \Gamma_1)^{-1} \cdot (sT_2 + 1) \cdot A$$ (8)

charakterisiert. Auf eine alternative Form stößt man, wenn man zunächst durch Einsetzen von Gl. (2) in Gl. (4) und anschließende partielle Integration die Responsefunktion des Gesamtsystems im Zeitbereich bestimmt,

$$\chi(\tau) = \delta(\tau)T_2 \cdot A + \theta(\tau)V_1(\tau) \cdot (1 - \Gamma_1 \cdot T_2) \cdot A ,$$ (9)

und daraus $\underline{\chi}(\omega)$ als $\int_{-\infty}^{\infty} d\tau e^{i\omega\tau} \chi(\tau)$ berechnet,

$$\underline{\chi}(is) = T_2 \cdot A + (s1 + \Gamma_1)^{-1} \cdot (1 - \Gamma_1 \cdot T_2) \cdot A .$$ (10)

Dies lässt sich auch durch direktes Umformen von Gl. (8) nachweisen. Es sei hier noch angemerkt, dass die Wirkung des "differenzierenden" Teilsystems offensichtlich durch die Wahl $T_2 = 0$ (und $A = 1$) gänzlich "abgeschaltet" werden kann. Ein völliges Abschalten des "integrierenden" Teilsystems ist durch passende Wahl von $\Gamma_1$ zwar nicht unmittelbar möglich, jedoch braucht hierzu in einer Realisierung des Bildfilters 3 lediglich auch das "Zwischensignal" *f(t)* abgegriffen werden.

Für eine zeitdiskrete Beschreibung kann man an mit Rückwärts-Differenzen angenäherte Formen von Gl. (1) und Gl. (2) anknüpfen,

$$\frac{u(t) - u(t - \Delta t)}{\Delta t} + \Gamma_1 \cdot u(t) = f(t) ,$$ (11)

$$T_2 \cdot A \cdot \frac{v(t) - v(t - \Delta t)}{\Delta t} + A \cdot v(t) = f(t)$$ (12)

[$\Delta t > 0$, Zeitschritt]. Die beiden dimensionslosen Matrizen

$$\varsigma_1 = (1 + \Delta t\Gamma_1)^{-1} , \quad \varsigma_2 = 1 + T_2 / \Delta t$$ (13)

eignen sich im diskreten Fall besser als Parameter als $\Gamma_1$ und $T_2$ selbst. Wegen $\Delta t > 0$ und der vorher getroffenen Annahme über $\Gamma_1$ ist $1+\Delta t\cdot\Gamma_1$ invertierbar.

Bezeichnet man die Zeitpunkte auf dem Raster mit $t_n=t_0+n\Delta$ ($t_0$ beliebig) und führt die Bezeichnung $u^{(n)}=u(t_n)$ etc. ein, geht Gl. (11) in

$$u^{(n)} - \varsigma_1 \cdot u^{(n-1)} = \Delta t\varsigma_1 \cdot f^{(n)}$$ (14)

und Gl. (12) in

$$\varsigma_2 \cdot A \cdot v^{(n)} + (1-\varsigma_2) \cdot A \cdot v^{(n-1)} = f^{(n)} \qquad (15)$$

über. Mit dem diskreten Propagator $W_1^{(N)} = \varsigma_1^N$ lässt sich völlig analog zu Gl. (4) die retardierte Lösung von Gl. (14) angeben:

$$u^{(n)} = \Delta t \sum_{n'=-\infty}^{n} W_1^{n-n'} \cdot \varsigma_1 \cdot f^{(n')} = \Delta t \sum_{N=0}^{\infty} W_1^N \cdot \varsigma_1 \cdot f^{(n-N)} = \Delta t \sum_{N=0}^{\infty} \varsigma_1^{N+1} \cdot f^{(n-N)} \qquad . \quad (16)$$

Wie im kontinuierlichen Fall ist das (Teil-)System kausal, wenn unsere Annahme über $\Gamma_1$ erfüllt ist. Analog zum Integral in Gl. (4) ist die Reihe in Gl. (16) dann (für vernünftige Eingangssignale $f$) konvergent. Die diskrete Responsefunktion des "integrierenden" Teilsystems ist folglich

$$Y_1^{(N)} = \Delta t \,\theta_+(N)\varsigma_1^{N+1} \,, \qquad (17)$$

wobei $\theta_+(x) = \lim_{\varepsilon \to o+} \theta(x+\varepsilon)$ gesetzt wurde (es soll also an der Sprungstelle $x=0$ der rechtsseitige Grenzwert Eins der Sprungfunktion genommen werden). Für das "differenzierende" Teilsystem liest man durch Vergleich mit $f^{(n)} = \sum_{N=-\infty}^{\infty} Y_2^{(N)} \cdot v^{(n-N)}$ aus Gl. (15) direkt die diskrete Responsefunktion ab:

$$Y_2^{(N)} = \left[\delta_{N,0}\varsigma_2 + \delta_{N,1}(1-\varsigma_2)\right] \cdot A \qquad . \quad (18)$$

Die diskrete Responsefunktion $Y^{(N)}$ des Gesamtsystems lässt sich aus Gl. (17) und Gl. (18) zu

$$Y^{(N)} = \sum_{N'=-\infty}^{\infty} Y_1^{(N-N')} \cdot Y_2^{(N')} = \Delta t \left[\theta_+(N)\varsigma_1^{N+1} \cdot \varsigma_2 + \theta_+(N-1)\varsigma_1^N \cdot (1-\varsigma_2)\right] \cdot A \qquad (19)$$

zusammensetzen. Ihr lässt sich schließlich auch noch eine Übertragungsfunktion $\Phi(z) = \sum_{N=-\infty}^{\infty} Y^{(N)} z^N$ zuordnen, die die $z$-transformierten Zustände $U(z) = \sum_{n=-\infty}^{\infty} u^{(n)} z^{-n}$ und $V(z) = \sum_{n=-\infty}^{\infty} v^{(n)} z^{-n}$ gemäß $U(z)=\Phi(z)\cdot V(z)$ verbindet und die wie im zeitkontinuierlichen Fall in das (Matrix-)Produkt der Übertragungsfunktionen der beiden Teilsysteme zerfällt. Für das "integrierende" Teilsystem findet man:

$$\Phi_1(z) = \sum_{N=-\infty}^{\infty} Y_1^{(N)} z^N = \Delta t \sum_{N=0}^{\infty} z^N \varsigma_1^{N+1} = \Delta t (1-z\varsigma_1)^{-1} \cdot \varsigma_1 \,, \qquad (20)$$

wobei die Konvergenz der Reihe (wegen unserer Bedingung an $\Gamma 1$) innerhalb des Einheitskreises der komplexen $z$-Ebene gegeben ist (sodass für $|z|<1$ auch keine Pole auftreten). Für das "differenzierende" Teilsystem gilt

$$\Phi_2(z) = \sum_{N=-\infty}^{\infty} Y_2^{(N)} z^N = \left[\varsigma_2 + z(1-\varsigma_2)\right] \cdot A = \left[z1 + (1-z)\varsigma_2\right] \cdot A \,, \qquad (21)$$

und für das Gesamtsystem folglich

$$\Phi(z) = \Phi_1(z) \cdot \Phi_2(z) = \Delta t (1-z\varsigma_1)^{-1} \cdot \varsigma_1 \cdot \left[z1 + (1-z)\varsigma_2\right] \cdot A \,, \qquad (22)$$

[vgl. auch Gl. (8)]. Ein "Abschalten" des (diskret) differenzierenden Teilsystems entspricht der Wahl $\varsigma_2 = 1$ (und $A=1$), ein "Abschalten" des (diskret) integrierenden Teilsystems kann wiederum indirekt anhand des "Zwischenabgriffs" $f^{(n)}$ bewirkt werden.

Zur Anwendung auf die Bildfilterung wird der Zustandsvektor $u$ (und analog $f$, $v$ etc.) als Vektor in einem $(N_1 \times N_2)$-dimensionalen Raum angenommen und seine (zweidimensional indizierten) Komponenten $u_{n_1 n_2}$ relativ zu einer festen Orthonormalbasis als die Helligkeitswerte von Bildpixeln aufgefasst,

$$u = \sum_{n_1=0}^{N_1-1} \sum_{m_2=0}^{N_2-1} u_{n_1 n_2} e_{n_1 n_2} \tag{23}$$

[orthonormale Basisvektoren $e_{n_1 n_2}$]. Die auf Zustände wirkenden Matrizen, z. B. in Gl. (8) oder (22), haben $(N_1 N_2)$ x $(N_1 N_2)$ Elemente. Eine analytische Behandlung der zugehörigen Eigenwertprobleme ist somit im Allgemeinen aussichtslos, sodass die Filterwirkung kaum noch detaillierter analysiert werden kann.

Es gibt jedoch Fälle, in denen dies doch möglich ist, zum einen natürlich den skalaren Fall, bei dem $A$, $\Gamma_1$ und $T_2$ allesamt Vielfache der Einheitsmatrix 1 sind. Die Pixel sind dann völlig entkoppelt, d. h. der zeitliche Verlauf der Signalwerte jedes Pixels wird für sich genommen rein temporal gefiltert (auf dieselbe Weise für alle Pixel). Die Zustände und Matrizen brauchen dann auch auf nur ein einzelnes Pixel bezogen werden, d. h. sie werden effektiv zu Skalaren. In diesem Fall weist die (skalare) Übertragungsfunktion genau eine Nullstelle und genau eine Polstelle auf, deren Lage unmittelbar aus den (skalaren) Filterparametern hervorgeht [siehe z. B. Gl.(8)].

Ein allgemeinerer Fall, bei dem die Lösung der Eigenwertprobleme möglich ist, ist der von Matrizen, die auf die Vektorkomponenten als Faltung wirken. Wegen der zwei Indizes an den Basisvektoren sind die Komponenten $M_{n_1 n_2 n'_1 n'_2}$ einer Matrix $M$ nun durch vier Indizes (bzw. zwei Indexpaare) gekennzeichnet. Bei einer Matrix, die als Faltung wirkt, hängen die Komponenten nur von $n_1-n'_1$ und $n_2-n'_2$ ab, können also auch wieder mit nur zwei Indizes geschrieben werden (2D-Faltungsmatrix). Es ist hierfür günstig, sich die Bilder $u_{n_1 n_2}$ etc. periodisch fortgesetzt zu denken und die Pixelindizes $n_1$ und $n_2$ ggf. nur mod $N_1$ bzw. mod $N_2$ zu lesen (zyklische Faltung). Wenn eine Faltungsmatrix - gemessen am Bild - klein ist, sind die störenden Randeffekte einer solchen zyklischen Faltung auf eine kleine Zone am Bildrand begrenzt. Bei einer gewöhnlichen Faltung (mit z. B. dem Anfügen von Nullen am Bildrand) gibt es freilich ebenfalls solche störenden Randeffekte.

Die Vektoren

$$b_{k_1 k_2} = \sum_{n_1, n_2} (b_{k_1 k_2})_{n_1, n_2} e_{n_1, n_2} \tag{24}$$

mit den Komponenten

$$(b_{k_1 k_2})_{n_1, n_2} = \frac{1}{\sqrt{N_1 N_2}} e^{i2\pi(k_1 n_1 / N_1 + k_2 n_2 / N_2)} \tag{25}$$

bilden eine Orthonormalbasis wie die ursprünglichen $e_{n_1, n_2}$ und sind gemeinsame Eigenvektoren aller zyklischen Faltungsmatrizen. Der Basiswechsel von den $e_{mn}$ zu den $b_{k_1 k_2}$ entspricht der diskreten, endlichen Fouriertransformation der zugeordneten Vektorkomponenten.

Die Eigenwertgleichung $F \cdot b_{k_1 k_2} = \lambda_{k_1 k_2} b_{k_1 k_2}$ für eine als (zyklische) Faltung wirkende Matrix $F$ lautet in Komponenten ausgeschrieben

$$\sum_{n'_1 n'_2} F_{n_1-n'_1, n_2-n'_2} (b_{k_1 k_2})_{n'_1 n'_2} = \sum_{n'_1, n'_2} F_{n'_2 n'_2} (b_{k_1 k_2})_{n_1-n'_1, n_2-n'_2} = \lambda_{k_1 k_2} (b_{k_1 k_2})_{n_1 n_2} \tag{26}$$

Da wegen Gl. (25) die Beziehung $(b_{k_1 k_2})_{n_1-n'_1, n_2-n'_2} = \exp[-i2\pi(k_1 n_1/N_1 + k_2 n_2/N_2)](b_{k_1 k_2})_{n_1 n_2}$ gilt, können die zugehörigen Eigenwerte $\lambda_{k_1 k_2}$ abgelesen werden:

$$\lambda_{k_1 k_2} = \sum_{n_1 n_2} F_{n_1 n_2} e^{-i2\pi(k_1 n_1 / N_1 + k_2 n_2 / N_2)} \quad . \tag{27}$$

Diese $N_1 \times N_2$ Eigenwerte brauchen natürlich im Allgemeinen nicht alle verschieden zu sein. Funktionen $h(F)$ einer

$$h(F) = \sum_{k_1 k_2} h(\lambda_{k_1 k_2}) b_{k_1 k_2} b_{k_1 k_2}^{\mathrm{T}}$$

Matrix $F$, die als zyklische Faltung wirkt, können damit gemäß $\qquad$ gebildet werden. Wegen des gemeinsamen Eigenvektorsystems sind natürlich auch alle Matrizen, die als zyklische Faltung wirken, miteinander vertauschbar. Für den Fall, dass $\Gamma_1$ und $T_2$ und auch $A$ derartige Matrizen sind, kann deshalb Gl. (8) als

$$\underline{\chi}(is) = \sum_{k_1 k_2} \left[ a_{k_1 k_2} \frac{s(t_2)_{k_1 k_2} + 1}{s + (\gamma_1)_{k_1 k_2}} \right] b_{k_1 k_2} b_{k_1 k_2}^{\mathrm{T}} \tag{28}$$

ausgewertet werden, wobei $(\gamma_1)_{k_1 k_2}$, $(t_2)_{k_1 k_2}$ und $a_{k_1 k_2}$ die zu $\Gamma_1$, $T_2$ bzw. $A$ gehörigen Eigenwerte sind, die wie durch Gl. (27) beschrieben aus den Einträgen der jeweiligen Faltungsmatrix direkt berechnet werden können. Die eckige Klammer in Gl. (28) kann als "skalare" Übertragungsfunktion betrachtet werden, die (im $\omega$- bzw. $s$-Bereich) die Übertragung räumlicher Fourierkomponenten zum jeweils gleichen Ortsfrequenzpaar angibt. Indem man Komponenten hinsichtlich der Basis $e_{n_1 n_2}$ nimmt, erhält man

$$\underline{\chi}_{n_1 - n_1', n_2 - n_2'}(is) = \sum_{k_1 k_2} \left[ \frac{a_{k_1 k_2}}{N_1 N_2} \frac{s(t_2)_{k_1 k_2} + 1}{s + (\gamma_1)_{k_1 k_2}} \right] e^{i2\pi[k_1(n_1 - n_1')/N_1 + k_2(n_2 - n_2')/N_2]} \quad . \tag{29}$$

Diese Übertragungsfunktion beschreibt die Response des Pixelwertes $u_{n_1 n_2}$ auf den ganzen Satz aller Pixelwerte $v_{n_1' n_2'}$, ohne direkten Bezug auf die räumlichen Fourierkomponenten nehmen zu müssen. Für den Fall, dass $\varsigma_1$ und $\varsigma_2$ Matrizen und auch $A$ Matrizen sind, die als (zyklische) Faltung wirken, ergibt sich für den zeitdiskreten Fall aus Gl. (22) völlig analog zu Gl. (28)

$$\Phi(z) = \sum_{k_1 k_2} \left\{ a_{k_1 k_2} \frac{\Delta t(\varsigma_1)_{k_1 k_2} [z + (1-z)(\varsigma_2)_{k_1 k_2}]}{[1 - z(\varsigma_1)_{k_1 k_2}]} \right\} b_{k_1 k_2} b_{k_1 k_2}^{\mathrm{T}} \quad . \tag{30}$$

Die geschweifte Klammer ist wieder die "skalare" Übertragungsfunktion, die (im $z$-Bereich) die Übertragung gleichartiger räumlicher Fourierkomponenten angibt. In den Gln. (28) und (30) ist auch der "skalare" Fall wieder mit eingeschlossen. Als Analogon von Gl. (29) ergibt sich

$$\Phi_{n_1 - n_1', n_2 - n_2'}(z) = \sum_{k_1 k_2} \left\{ \frac{a_{k_1 k_2}}{N_1 N_2} \frac{\Delta t(\varsigma_1)_{k_1 k_2} [z + (1-z)(\varsigma_2)_{k_1 k_2}]}{[1 - z(\varsigma_1)_{k_1 k_2}]} \right\} e^{i2\pi[k_1(n_1 - n_1')/N_1 + k_2(n_2 - n_2')/N_2]} \quad . \tag{31}$$

Der Ausdruck Gl. (27) gilt unabhängig von der Größe für die Eigenwerte von Faltungsmatrizen. Wenn eine Faltungsmatrix $F_{n_1 n_2}$ beispielsweise nur für $|n_1| \leq 1$ und $|n_2| \leq 1$ von Null verschieden ist [(3 x 3)-Matrixfilter] und die spezielle hochsymmetrische Form

$$F_{n_1 n_2} = \left\{ \begin{array}{ccccccc} \cdots & \cdots & \cdots & \cdots & \cdots & \cdots & \cdots \\ \cdots & 0 & 0 & 0 & 0 & 0 & \cdots \\ \cdots & 0 & A & B & A & 0 & \cdots \\ \cdots & 0 & B & C & B & 0 & \cdots \\ \cdots & 0 & A & B & A & 0 & \cdots \\ \cdots & 0 & 0 & 0 & 0 & 0 & \cdots \\ \cdots & \cdots & \cdots & \cdots & \cdots & \cdots & \cdots \end{array} \right\} \qquad (32)$$

besitzt, reduziert sich Gl. (27) auf

$$\lambda_{k_1 k_2} = 2A\{\cos[2\pi(k_1/N_1 + k_2/N_2)] + \cos[2\pi(k_1/N_1 - k_2/N_2)]\} +$$
$$+ 2B\{\cos[2\pi(k_1/N_1)] + \cos[2\pi(k_2/N_2)]\} + C \qquad (33)$$

Die Gleichung (33) gilt für alle Eigenwerte der Faltungsmatrizen der in Gleichung (32) beschriebenen Art und ist somit einheitlich für Nullstellen, Polstellen und Amplituden-Eigenwerte anwendbar. Man sieht, dass durch Anpassung der wenigen Parameter $A$, $B$ und $C$ die Lage der $N_1 N_2$ Eigenwerte einer Faltungsmatrix natürlich nur auf eingeschränkte Weise manipuliert werden kann. Die Einschränkungen werden freilich geringer, wenn mehr als drei unabhängige Parameter und ggf. größere Faltungsmatrizen in Betracht gezogen werden.

Die für die Filterkonfiguration entscheidenden Nullstellen $s=-1/(t_2)_{k_1 k_2}$, Polstellen $s=-(\gamma_2)_{k_1 k_2}$ sowie die Amplituden-Eigenwerte $a_{k_1 k_2}$ hängen separat von jeweils einem derartigen Parametersatz ab. Zur Konfiguration des Bildfilters 3 für ein konkretes Problem möchte man sie möglichst frei und gezielt vorgeben können, was durch die genannten Einschränkungen allerdings nicht möglich ist. Da der Zusammenhang zwischen den (jeweils drei oder ggf. mehr) Parametern und den je $N_1 N_2$ Eigenwerten aber durch lineare Beziehungen wie Gl. (33) gegeben ist, kann man dieses Problem (computergestützt) dadurch zu lösen versuchen, dass man alle Nullstellen, Polstellen und Amplituden-Eigenwerte zunächst trotzdem nach Maßgabe des konkreten Problems vorschreibt. Zum Beispiel könnte man eine bestimmte funktionale Abhängigkeit von den diskreten Ortsfrequenz-Indizes $k_1$ und $k_2$ vorgeben. Dabei entstehen drei separate Systeme von je $N_1 N_2$ linearen Gleichungen für die (jeweils drei oder ggf. mehr) zugeordneten Filterkernparameter. Diese linearen Gleichungssysteme sind - außer bei Faltungsmatrizen in Vollbildgröße - natürlich überbestimmt, d. h. sie besitzen keine exakte Lösung. Es können jedoch numerisch dafür optimale Näherungslösungen bestimmt werden, die das jeweilige Gleichungssystem im Sinne der kleinsten Fehlerquadrate bestmöglich befriedigen. Dabei kann auch noch eine bestimmte Gewichtung der einzelnen Ortsfrequenzen berücksichtigt werden, wodurch im Sinne einer Kompromissfindung eine angestrebte Filterwirkung in bestimmten Ortsfrequenzbereichen besser, jedoch zulasten der Wirkung in anderen Ortsfrequenzbereichen, erreicht wird. Je nach Größe der Restfehler kann man dann hoffen, dass so ermittelte Filterparameter eine Filtercharakteristik herbeiführen, die das angestrebte Verhalten mehr oder weniger gut annähert.

In obigen Überlegungen stand die Kaskadierung zweier Teilsysteme erster Ordnung am Anfang, wobei ein "differenzierendes" Teilsystem Gl. (2) und ein "integrierendes" Teilsystem Gl. (1) über den Zwischensignalvektor $f$ hintereinandergeschaltet waren. Wie die für die Übertragungsfunktionen erhaltenen Ausdrücke zeigen, ergab dies (im "skalaren" Fall) die Möglichkeit, durch eine Nullstelle eine Polstelle und/oder durch eine Polstelle eine Nullstelle mittels des kaskadierten Gesamtfilters zu kompensieren. Es ist klar, dass mit Hilfe von zusätzlichen Zwischensignalvektoren ohne Weiteres ganz analog auch mehrere Teilsysteme erster Ordnung von einem oder beiden Teilsystemtypen kaskadiert werden können. Im skalaren Fall führt dies zu der Möglichkeit, mehrere Polstellen und/oder Nullstellen mit dem entstehenden Gesamtfilter zu kompensieren.

Dieselbe Verallgemeinerung ist aber auch im Fall von Koeffizienten, die Matrizen sind, völlig analog möglich. Von $\Gamma_1$ und $T_2$ (und ggf. auch $A$) gibt es dann mehrere Ausgaben $\Gamma_1^{(\alpha)}$ bzw. $T_2^{(\beta)}$. Wenn die Matrizen als Faltungsmatrizen fungieren und man auf zusätzliche Duplikate von $A$ verzichtet, ist ohne erneute Rechnung klar, dass beispielsweise Gl. (28) zu

$$\underline{\chi}(is) = \sum_{k_1,k_2} a_{k_1,k_2} \left[ \frac{s(t_2^{(1)})_{k_1,k_2}+1}{s+(\gamma_1^{(1)})_{k_1,k_2}} \right]\left[ \frac{s(t_2^{(2)})_{k_1,k_2}+1}{s+(\gamma_1^{(2)})_{k_1,k_2}} \right][...]b_{k_1 k_2}\, b_{k_1 k_2}^{\mathrm{T}} \tag{34}$$

verallgemeinert werden kann. Auf die weitere Explizierung kann hier verzichtet werden.

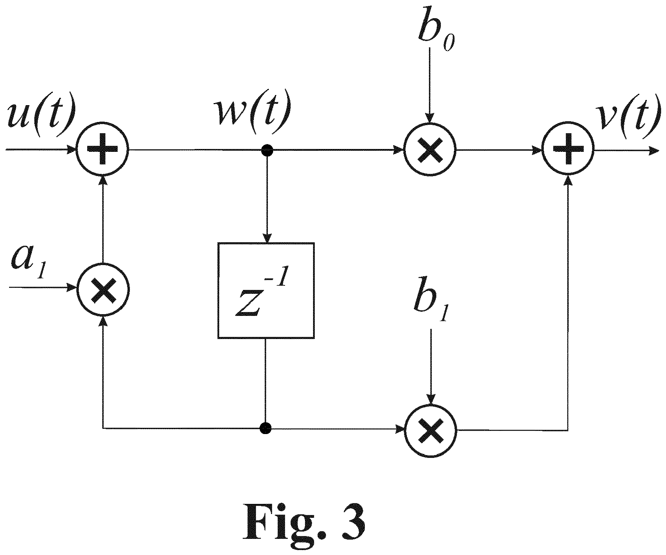

In Fig. 3 ist die Erfindung in einer ersten Ausführung als Prinzipdarstellung eines IIR-Systems gezeigt, mit der das oben beschriebene Bildfilter 3 in einer rekursiven Art realisiert wird.

Fig. 3 zeigt - schematisch skizziert - einen Signallaufplan in einer kanonischen Normalform. Aktuelle (zu einem Zeitpunkt $t$ gehörige) Zwischensignaldaten $w(t)$ werden aus aktuellen (zur selben Zeit $t$ gehörigen) Filtereingangsdaten $u(t)$ und zum vorigen diskreten Zeitpunkt gehörigen, verzögerten Zwischensignaldaten (Symbol $z^{-1}$ für die zeitliche Verzögerung) linear kombiniert. Aktuelle und verzögerte Zwischensignaldaten werden zum korrigierten Ergebnissignal $v(t)$ linear kombiniert. Die zum Bilden der Linearkombinationen benutzten Koeffizienten (hier im skalaren Fall mit $a_1$, $b_0$, $b_1$ sowie 1 bezeichnet) sind skalarwertig, wenn das Bildfilter 3 pixelweise arbeitet (rein zeitliche Filterung). Bei echt räumlich-zeitlicher Filterung wirken sie als Faltungsmatrix auf die Filtereingangsdaten 31 bzw. Zwischensignaldaten, sodass Pixelwerte auch räumlich gemischt werden.

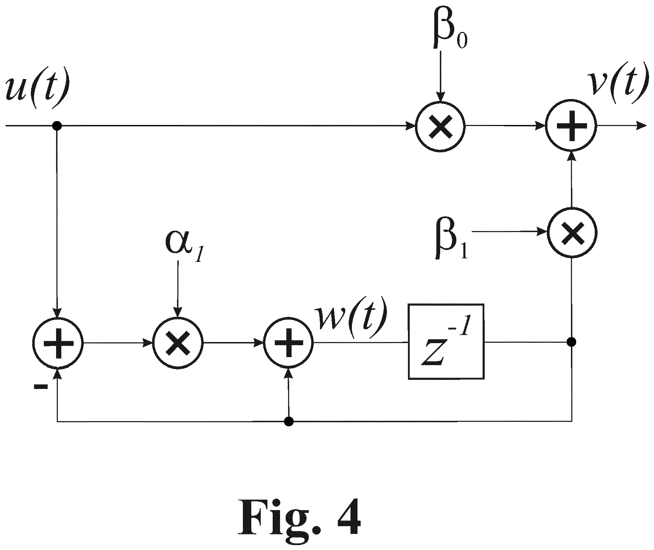

In einer zweiten bevorzugten Ausführung der erfindungsgemäßen Wärmebildkamera ist das Bildfilter 3 gemäß Fig. 4 realisiert.

In Fig. 4 ist schematisch ein Signallaufplan in einer bevorzugten Ausführungsform skizziert. Aktuelle Zwischensignaldaten $w(t)$ werden aus verzögerten Zwischensignaldaten und der Differenz von aktuellen Filtereingangsdaten $u(t)$ und verzögerten Zwischensignaldaten (Symbol $z^{-1}$ für die zeitliche Verzögerung) linear kombiniert. Aktuelle Filtereingangsdaten und verzögerte Zwischensignaldaten werden zum korrigierten Ergebnissignal $v(t)$ linear kombiniert. Die zum Bilden der Linearkombinationen benutzten Koeffizienten (hier mit $\alpha_1$, $\beta_0$ und $\beta_1$ bezeichnet) sind wiederum skalarwertig, wenn das Bildfilter 3 rein zeitlich arbeitet, und wirken als Faltungsmatrix bei echt räumlich-zeitlicher Filterung.

Das erfindungsgemäße Verfahren und die erfindungsgemäße Wärmebildkamera sind bei Systemen, die sich hinsichtlich ihrer funktionellen Bestimmung (Frequenzgangkorrektur, Rauschunterdrückung, Bildglättung und Bildschärfung) und ihrer Realisierung (skalare / matrixwertige Koeffizienten) unterscheiden, verwendbar.

Die dargestellte technische Lösung verringert den dynamischen Temperaturmessfehler und die Bewegungsunschärfe einer IR-Wärmebildkamera. Damit öffnen sich Anwendungsgebiete, die bisher ausschließlich den gekühlten photonischen IR-Sensoren vorbehalten waren, für preiswerte Mikrobolometerarrays (beispielsweise Messung der Reifentemperatur vorbeifahrender LKW zur Erkennung von Gefahrensituationen). Von Vorteil ist, dass sich mit einem festen Systemdesign des räumlich-temporalen Bildfilters 3 allein durch Ändern von Parametern verschiedenartige Funktionen realisieren lassen, wie Frequenzgangkorrektur, Rauschunterdrückung, Bildglättung oder Bildschärfung.

Bezugszeichen

| | |
|---|---|
| 1 | (thermischer) IR-Bildsensor |
| 11 | (IR-)Sensorarray |
| 12 | Ausleseschaltung |
| 13 | Bildvorverarbeitungseinheit |
| 2 | Bilddatenstrom |
| 3 | Bildfilter |
| 31 | Filtereingangsdaten |
| 32 | räumliche Dimension |
| 33 | zeitliche Dimension |
| 4 | (korrigierte) Ergebnisbilddaten |
| 5 | Parameterberechnungseinheit (für Bildfiltereinstellung bzw. -anpassung) |

Patentansprüche

1. Verfahren zur berührungslosen Temperaturmessung oder zur Beobachtung von schnell bewegten IR-Szenen mit einem thermischen IR-Bildsensor (1) mit den Schritten:

- Aufnehmen einer IR-Szene mittels des thermischen IR-Bildsensors (1),
- Auslesen eines Sensorarrays (11) des IR-Bildsensors (1) mit einer Bildrate, die höher ist als eine der thermi-

schen Zeitkonstante $\tau_{th}$ des IR-Bildsensors zugeordnete charakteristische Frequenz und Bereitstellen von Sensorsignalen in Form von vorverarbeiteten Filtereingangsdaten (31),

- Anwenden eines räumlich-temporalen Bildfilters (3), bei dem eine matrixwertige Übertragungsfunktion einstellbare Parameter enthält und in Form von Matrixelementen das Responseverhalten jedes einzelnen korrigierten Ergebnispixelwertes von ausgegebenen Ergebnisbilddaten (4) auf einen gesamten Satz zeitlich vorangegangener Pixelwerte der Filtereingangsdaten (31) charakterisiert, wobei eine Einstellung einer gewünschten Filtercharakteristik erfolgt durch:

• Anpassen von Parametern des Bildfilters (3) zur Beeinflussung der Lage von Eigenwerten wenigstens einer Faltungsmatrix, um mindestens Nullstellen oder Polstellen in der Übertragungsfunktion der Konfiguration des Bildfilters (3) an eine konkrete Messaufgabe oder Beobachtungsaufgabe anzupassen, wobei ein lineares Gleichungssystem zur Beeinflussung der Eigenwerte der wenigstens einen Faltungsmatrix mittels numerischer Verfahren mindestens näherungsweise gelöst wird.

2. Verfahren nach Anspruch 1, wobei das Auslesen des Sensorarrays (11) des IR-Bildsensors (1) mit einer Bildrate geschieht, die mindestens das Doppelte der charakteristischen Frequenz, die der thermischen Zeitkonstanten $\tau_{th}$ der Sensorelemente des Sensorarrays (11) des IR-Bildsensors (1) zugeordnet ist, beträgt.

3. Verfahren nach Anspruch 1, wobei das Auslesen des Sensorarrays (11) des IR-Bildsensors (1) mit einer Bildrate geschieht, die mindestens das Dreifache der charakteristischen Frequenz, die der thermischen Zeitkonstanten $\tau_{th}$ der Sensorelemente des Sensorarrays (11) des IR-Bildsensors (1) zugeordnet ist, beträgt.

4. Verfahren nach Anspruch 1, wobei das Anpassen der Parameter des Bildfilters (3) zur Beeinflussung der Eigenwerte der mindestens einen Faltungsmatrix durch numerisches Lösen des linearen Gleichungssystems mittels Näherungslösungen auf Basis der kleinsten Fehlerquadrate erfolgt.

5. Verfahren nach Anspruch 1, wobei zusätzlich zu den Polstellen und Nullstellen auch Amplituden-Eigenwerte der Konfiguration des Bildfilters (3) durch Erweiterung des linearen Gleichungssystems mit weiteren linearen Gleichungen angepasst werden.

6. Verfahren nach Anspruch 1, wobei bei der numerischen Lösung des linearen Gleichungssystems zusätzlich eine Gewichtung von bestimmten Ortsfrequenzen vorgenommen wird

7. Wärmebildkamera zur berührungslosen Temperaturmessung oder zur Beobachtung von schnell bewegten IR-Szenen mit einem thermischen IR-Bildsensor (1), **dadurch gekennzeichnet, dass**

- mindestens ein räumlich-temporales Bildfilter (3) dem Ausgang des IR-Bildsensors (1) nachgeordnet ist wobei das Auslesen eines Sensorarrays (11) des IR-Bildsensors (1) mit einer Bildrate erfolgt, die höher ist als eine der thermischen Zeitkonstante $\tau_{th}$ des IR-Bildsensors zugeordnete charakteristische Frequenz und Sensorsignalen in Form von vorverarbeiteten Filtereingangsdaten (31) bereitgestellt werden,

- das Bildfilter (3) als mindestens eine Bildverarbeitungseinheit zur Realisierung einer matrixwertigen Übertragungsfunktion ausgebildet ist, wobei

- die matrixwertige Übertragungsfunktion einstellbare Parameter enthält und in Form von Matrixelementen das Responseverhalten jedes einzelnen korrigierten Ergebnispixelwertes von ausgegebenen Ergebnisbilddaten (4) auf einen gesamten Satz zeitlich vorangegangener Pixelwerte der Filtereingangsdaten (31) charakterisiert, wobei eine Einstellung einer gewünschten Filtercharakteristik erfolgt durch Anpassen von Parametern des Bildfilters (3) zur Beeinflussung der Lage von Eigenwerten wenigstens einer Faltungsmatrix, um mindestens Nullstellen oder Polstellen in der Übertragungsfunktion der Konfiguration des Bildfilters (3) an eine konkrete Messaufgabe oder Beobachtungsaufgabe anzupassen, wobei ein lineares Gleichungssystem zur Beeinflussung der Eigenwerte der wenigstens einen Faltungsmatrix mittels numerischer Verfahren mindestens näherungsweise gelöst wird.

8. Wärmebildkamera nach Anspruch 7, **dadurch gekennzeichnet, dass** das Bildfilter (3) in wenigstens einer Parameterberechnungseinheit (5) mindestens temporär Mittel zur Einstellung von Parametern des Bildfilters (3) durch Beeinflussung der Lage von Eigenwerten wenigstens einer Faltungsmatrix aufweist, um mindestens Nullstellen oder Polstellen der Übertragungsfunktion an eine konkrete Messaufgabe oder Beobachtungsaufgabe anzupassen, wobei die Mittel zur Einstellung der Parameter eine Rechnereinheit zur Lösung eines linearen Gleichungssystems für die Beeinflussung der Eigenwerte der wenigstens einen Faltungsmatrix mittels numerischer Näherungsverfahren beinhalten.

9. Wärmebildkamera nach Anspruch 7, **dadurch gekennzeichnet, dass** die Übertragungsfunktion des räumlich-temporalen Bildfilters (3) in einer komplexen s-Ebene im Bildbereich einer Laplace-Transformation eine oder mehrere Nullstellen zur Kompensation der Polstellen der Übertragungsfunktion des IR-Bildsensors (1) hat oder eine oder mehrere Polstellen zur Begrenzung der Rauschbandbreite aufweist.

10. Wärmebildkamera nach Anspruch 7, **dadurch gekennzeichnet, dass** ein oder mehrere Filterkoeffizienten entweder matrixwertig und als Faltungsmatrix im Ortsraum ausgebildet oder skalarwertig und so bemessen sind, dass mittels der Übertragungsfunktion des Bildfilters (3) die Auswirkungen der thermische Trägheit der Sensorpixel in den zugehörigen Ergebnispixelwerten der ausgegebenen Ergebnisbilddaten (4) reduziert sind.

11. Wärmebildkamera nach Anspruch 7, **dadurch gekennzeichnet, dass** ein oder mehrere Filterkoeffizienten matrixwertig und als wenigstens eine Faltungsmatrix im Ortsraum ausgebildet so bemessen sind, dass mittels der Übertragungsfunktion des Bildfilters (3) die Auswirkungen des Übersprechens der Sensorpixel des IR-Sensorarrays (11) in den zugehörigen Ergebnispixelwerten der ausgegebenen Ergebnisbilddaten (4) reduziert sind.

12. Wärmebildkamera nach Anspruch 7, **dadurch gekennzeichnet, dass** ein oder mehrere Filterkoeffizienten matrixwertig und als wenigstens eine Faltungsmatrix im Ortsraum ausgebildet so bemessen sind, dass mittels der Übertragungsfunktion des Bildfilters (3) die ausgegebenen Ergebnisbilddaten (4) von Ergebnispixelwerten eine räumliche Bildglättung oder Bildschärfung aufweisen.

13. Wärmebildkamera nach Anspruch 7, **dadurch gekennzeichnet, dass** ein oder mehrere Filterkoeffizienten skalarwertig und so bemessen sind, dass mittels der Übertragungsfunktion des Bildfilters (3) die Rauschbandbreite der Sensorpixel in den zugehörigen Ergebnispixelwerten der ausgegebenen Ergebnisbilddaten (4) reduziert ist.

14. Wärmebildkamera nach Anspruch 7, **dadurch gekennzeichnet, dass** ein oder mehrere Filterkoeffizienten des Bildfilters (3) in Abhängigkeit vom Bildinhalt fortlaufend variabel anpassbar sind, sodass mittels der Übertragungsfunktion des Bildfilters (3) stets eine optimierte Filterwirkung bei minimalen Artefakten in den ausgegebenen Ergebnisbilddaten (4) eingestellt ist.

15. Wärmebildkamera nach Anspruch 7, **dadurch gekennzeichnet, dass** eine gewünschte Übertragungsfunktion des Bildfilters (3) durch ein IIR-System approximativ realisiert ist.

## Claims

1. Method for contactless temperature measurement or for observation of quickly moving IR scenes with a thermal IR image sensor (1) comprising the steps of:

   - capturing an IR scene by means of the thermal IR image sensor (1),
   - reading out a sensor array (11) of the IR image sensor (1) at a frame rate which is higher than a characteristic frequency associated with the thermal time constant $\tau_{th}$ of the IR image sensor and providing sensor signals in the form of pre-processed filter input data (31),
   - applying a spatio-temporal image filter (3), in which a matrix-valued transfer function contains adjustable parameters and in the form of matrix elements characterizes the response behaviour of each individual corrected result pixel value of output result image data (4) to an entire set of temporally preceding pixel values of the filter input data (31), wherein a desired filter characteristic is adjusted by:

     • adjusting parameters of the image filter (3) for influencing the position of eigenvalues of at least one convolution matrix in order to adapt at least zeros or poles in the transfer function of the configuration of the image filter (3) to a specific measurement task or observation task, wherein a linear equation system for influencing the eigenvalues of the at least one convolution matrix is solved at least approximately by means of numerical methods.

2. Method according to claim 1, wherein the sensor array (11) of the IR image sensor (1) is read out at a frame rate which is at least twice the characteristic frequency associated with the thermal time constant $\tau_{th}$ of the sensor elements of the sensor array (11) of the IR image sensor (1).

3. Method according to claim 1, wherein the sensor array (11) of the IR image sensor (1) is read out at a frame rate which is at least three times the characteristic frequency associated with the thermal time constant $\tau_{th}$ of the sensor elements of the sensor array (11) of the IR image sensor (1).

4. Method according to claim 1, wherein the parameters of the image filter (3) are adjusted for influencing the eigenvalues of the at least one convolution matrix by numerically solving the linear equation system by means of approximate solutions based on the least error squares.

5. Method according to claim 1, wherein, in addition to the poles and zeros, also amplitude eigenvalues of the configuration of the image filter (3) are adjusted by extending the linear equation system by other linear equations.

6. Method according to claim 1, wherein certain spatial frequencies are additionally weighted in the numerical solution of the linear equation system.

7. Thermal camera for contactless temperature measurement or for observation of quickly moving IR scenes with a thermal IR image sensor (1), **characterized in that**

    - at least one spatio-temporal image filter (3) is arranged downstream of the output of the IR image sensor (1), wherein a sensor array (11) of the IR image sensor (1) is read out at a frame rate which is higher than a characteristic frequency associated with the thermal time constant $\tau_{th}$ of the IR image sensor and wherein sensor signals in the form of pre-processed filter input data (31) are provided,
    - the image filter (3) is constructed as at least one image processing unit for implementing a matrix-valued transfer function, wherein
    - the matrix-valued transfer function contains adjustable parameters and in the form of matrix elements characterizes the response behaviour of each individual corrected result pixel value of output result image data (4) to an entire set of temporally preceding pixel values of the filter input data (31), wherein a desired filter characteristic is adjusted by adjusting parameters of the image filter (3) for influencing the position of eigenvalues of at least one convolution matrix in order to adapt at least zeros or poles in the transfer function of the configuration of the image filter (3) to a specific measurement task or observation task, wherein a linear equation system for influencing the eigenvalues of the at least one convolution matrix is solved at least approximately by means of numerical methods.

8. Thermal camera according to claim 7, **characterized in that** in at least one parameter calculation unit (5) the image filter (3) at least temporarily has means for adjusting parameters of the image filter (3) by influencing the position of eigenvalues of at least one convolution matrix in order to adapt at least zeros or poles of the transfer function to a specific measurement task or observation task, wherein the means for adjusting the parameters include a computer unit for solving a linear equation system for influencing the eigenvalues of the at least one convolution matrix by means of numerical approximation methods.

9. Thermal camera according to claim 7, **characterized in that** in a complex s-plane in the image area of a Laplace transformation the transfer function of the spatio-temporal image filter (3) has one or more zeros to compensate for the poles of the transfer function of the IR image sensor (1) or has one or more poles to limit the noise bandwidth.

10. Thermal camera according to claim 7, **characterized in that** one or more filter coefficients are either matrix-valued and configured as a convolution matrix in the spatial domain or scalar-valued and dimensioned such that by means of the transfer function of the image filter (3) the effects of the thermal inertia of the sensor pixels in the associated result pixel values of the output result image data (4) are reduced.

11. Thermal camera according to claim 7, **characterized in that** one or more filter coefficients are matrix-valued and configured as at least one convolution matrix in the spatial domain are dimensioned such that by means of the transfer function of the image filter (3) the effects of the crosstalk of the sensor pixels of the IR sensor array (11) in the associated result pixel values of the output result image data (4) are reduced.

12. Thermal camera according to claim 7, **characterized in that** one or more filter coefficients are matrix-valued and configured as at least one convolution matrix in the spatial domain are dimensioned such that by means of the transfer function of the image filter (3) the output result image data (4) of result pixel values have a spatial image smoothing or image sharpening.

13. Thermal camera according to claim 7, **characterized in that** one or more filter coefficients are scalar-valued and dimensioned such that by means of the transfer function of the image filter (3) the noise bandwidth of the sensor pixels in the associated result pixel values of the output result image data (4) is reduced.

14. Thermal camera according to claim 7, **characterized in that** one or more filter coefficients of the image filter (3) are continuously variably adjustable depending on the image content, so that by means of the transfer function of the image filter (3) there is always an optimised filter effect set with minimal artefacts in the output result image data (4).

15. Thermal camera according to claim 7, **characterized in that** a desired transfer function of the image filter (3) is implemented approximately by an IIR system.

**Revendications**

1. Procédé de mesure de température sans contact ou de surveillance de scènes IR à déplacement rapide avec un capteur d'image IR (1) thermique comprenant les étapes:

   - capturer une scène IR au moyen du capteur d'image IR (1) thermique,
   - lire un réseau de capteurs (11) du capteur d'image IR (1) à un débit de trame qui est supérieur à une fréquence caractéristique associée à la constante de temps thermique $\tau_{th}$ du capteur d'image IR et fournir des signaux de capteur sous la forme de données d'entrée de filtre (31) prétraitées,
   - appliquer un filtre d'image (3) spatio-temporel, dans lequel une fonction de transfert à valeur de matrice contient des paramètres ajustables et sous la forme d'éléments de matrice caractérise le comportement de réponse de chaque valeur de pixel de résultat corrigée individuelle de données d'image de résultat (4) sorties à un ensemble complet de valeurs de pixels temporellement précédentes des données d'entrée de filtre (31), une caractéristique de filtre souhaitée étant ajustée par:

     • l'ajustement de paramètres du filtre d'image (3) pour influencer la position de valeurs propres d'au moins une matrice de convolution afin d'adapter au moins des zéros ou des pôles dans la fonction de transfert de la configuration du filtre d'image (3) à une tâche de mesure ou une tâche de surveillance spécifique, un système d'équations linéaires pour influencer les valeurs propres de l'au moins une matrice de convolution étant résolu au moins approximativement au moyen de méthodes numériques.

2. Procédé selon la revendication 1, dans lequel le réseau de capteurs (11) du capteur d'image IR (1) est lu à un débit de trame qui est au moins deux fois la fréquence caractéristique associée à la constante de temps thermique $\tau_{th}$ des éléments de capteur du réseau de capteurs (11) du capteur d'image IR (1).

3. Procédé selon la revendication 1, dans lequel le réseau de capteurs (11) du capteur d'image IR (1) est lu à un débit de trame qui est au moins trois fois la fréquence caractéristique associée à la constante de temps thermique $\tau_{th}$ des éléments de capteur du réseau de capteurs (11) du capteur d'image IR (1).

4. Procédé selon la revendication 1, dans lequel les paramètres du filtre d'image (3) sont ajustés pour influencer les valeurs propres de l'au moins une matrice de convolution en résolvant numériquement le système d'équations linéaires au moyen de solutions d'approximation sur la base des moindres carrés d'erreur.

5. Procédé selon la revendication 1, dans lequel, en plus des pôles et des zéros, aussi des valeurs propres d'amplitude de la configuration du filtre d'image (3) sont ajustées en étendant le système d'équations linéaires par d'autres équations linéaires.

6. Procédé selon la revendication 1, dans lequel, en outre, certaines fréquences spatiales sont pondérées dans la solution numérique du système d'équations linéaires.

7. Caméra thermique pour la mesure de température sans contact ou pour la surveillance de scènes IR à déplacement rapide avec un capteur d'image IR (1) thermique, **caractérisée en ce que**

   - au moins un filtre d'image (3) spatio-temporel est disposé en aval de la sortie du capteur d'image IR (1), le réseau de capteurs (11) du capteur d'image IR (1) étant lu à un débit de trame qui est supérieur à une fréquence caractéristique associée à la constante de temps thermique $\tau_{th}$ du capteur d'image IR et des signaux de capteur étant fournis sous la forme de données d'entrée de filtre (31) prétraitées,

- le filtre d'image (3) se présente sous la forme d'au moins une unité de traitement d'images pour réaliser une fonction de transfert à valeur de matrice,
- la fonction de transfert à valeur de matrice contenant des paramètres ajustables et sous la forme d'éléments de matrice caractérisant le comportement de réponse de chaque valeur de pixel de résultat corrigée individuelle de données d'image de résultat (4) sorties à un ensemble complet de valeurs de pixels temporellement précédentes des données d'entrée de filtre (31), une caractéristique de filtre souhaitée étant ajustée par l'ajustement de paramètres du filtre d'image (3) pour influencer la position de valeurs propres d'au moins une matrice de convolution afin d'adapter au moins des zéros ou des pôles dans la fonction de transfert de la configuration du filtre d'image (3) à une tâche de mesure ou une tâche de surveillance spécifique, un système d'équations linéaires pour influencer les valeurs propres de l'au moins une matrice de convolution étant résolu au moins approximativement au moyen de méthodes numériques.

8. Caméra thermique selon la revendication 7, **caractérisée en ce que** dans au moins une unité de calcul de paramètres (5) le filtre d'image (3) a au moins temporairement des moyens pour ajuster des paramètres du filtre d'image (3) en influençant la position de valeurs propres d'au moins une matrice de convolution, afin d'adapter au moins des zéros ou des pôles de la fonction de transfert à une tâche de mesure ou une tâche de surveillance spécifique, les moyens pour influencer les paramètres comprenant une unité de calcul pour résoudre un système d'équations linéaires pour influencer les valeurs propres de l'au moins une matrice de convolution au moyen de méthodes d'approximation numérique.

9. Caméra thermique selon la revendication 7, **caractérisée en ce que** dans un plan s complexe dans la zone d'image d'une transformation de Laplace la fonction de transfert du filtre d'image (3) spatio-temporel a un ou plusieurs zéros pour compenser les pôles de la fonction de transfert du capteur d'image IR (1) ou possède un ou plusieurs pôles pour limiter la largeur de bande de bruit.

10. Caméra thermique selon la revendication 7, **caractérisée en ce qu'**un ou plusieurs coefficients de filtre sont soit à valeur de matrice et formés en tant que matrice de convolution dans le domaine spatial soit à valeur scalaire et dimensionnés de telle façon qu'au moyen de la fonction de transfert du filtre d'image (3) les effets de l'inertie thermique des pixels de capteur dans les valeurs de pixel de résultat associées des données d'image de résultat (4) sorties sont réduits.

11. Caméra thermique selon la revendication 7, **caractérisée en ce qu'**un ou plusieurs coefficients de filtre sont à valeur de matrice et formés en tant qu'au moins une matrice de convolution dans le domaine spatial sont dimensionnés de telle façon qu'au moyen de la fonction de transfert du filtre d'image (3) les effets de la diaphonie des pixels de capteur du réseau de capteurs IR (11) dans les valeurs de pixel de résultat associées des données d'image de résultat (4) sorties sont réduits.

12. Caméra thermique selon la revendication 7, **caractérisée en ce qu'**un ou plusieurs coefficients de filtre sont à valeur de matrice et formés en tant qu'au moins une matrice de convolution dans le domaine spatial sont dimensionnés de telle façon qu'au moyen de la fonction de transfert du filtre d'image (3) les données d'image de résultat (4) sorties de valeurs de pixel de résultat ont un lissage d'image ou une netteté d'image.

13. Caméra thermique selon la revendication 7, **caractérisée en ce qu'**un ou plusieurs coefficients de filtre sont à valeur scalaire et dimensionnés de telle façon qu'au moyen de la fonction de transfert du filtre d'image (3) la largeur de bande de bruit des pixels de capteur dans les valeurs de pixel de résultat associées des données d'image de résultat (4) sorties est réduite.

14. Caméra thermique selon la revendication 7, **caractérisée en ce qu'**un ou plusieurs coefficients de filtre du filtre d'image (3) sont ajustables de manière variable en continu selon le contenu d'image, de sorte qu'au moyen de la fonction de transfert du filtre d'image (3) un effet de filtre optimisé est toujours ajusté avec un minimum d'artefacts dans les données d'image de résultat (4) sorties.

15. Caméra thermique selon la revendication 7, **caractérisée en ce qu'**une fonction de transfert souhaitée du filtre d'image (3) est réalisée approximativement par un système IIR.

**Fig. 1**

EP 3 301 640 B1

**Fig. 2**

**Fig. 3**

**Fig. 4**

**Fig. 5**